# EUROPÄISCHE PATENTSCHRIFT

(11) **EP 3 784 508 B1**
(45) Veröffentlichungstag und Bekanntmachung des Hinweises auf die Patenterteilung: **16.03.2022**
(21) Anmeldenummer: 19719454.1
(22) Anmeldetag: 15.04.2019
(51) Int. Cl.: B60G 17/015, B60G 17/056

(54) **HYDRAULISCHE ACHSHÖHENVERSTELLUNG FÜR EINE MOBILE ARBEITSMASCHINE**
HYDRAULIC AXLE HEIGHT ADJUSTMENT FOR A MOBILE WORKING MACHINE
RÉGLAGE HYDRAULIQUE DE LA HAUTEUR D'ESSIEU D'UNE MACHINE DE TRAVAIL MOBILE

(30) Priorität: 26.04.2018 DE 102018206462
(43) Veröffentlichungstag der Anmeldung: 03.03.2021
(73) Patentinhaber: Robert Bosch GmbH, 70442 Stuttgart (DE)
(72) Erfinder: MAIER, Uwe, 71679 Asperg (DE); LENZGEIGER, Ulrich, 86424 Dinkelscherben (DE)
(86) Internationale Anmeldenummer: PCT/EP2019/059646
(87) Internationale Veröffentlichungsnummer: WO 2019/206711

(56) Entgegenhaltungen:
- DE-A1- 10 232 769
- DE-A1- 10 337 601
- DE-A1-102011 076 849
- DE-A1-102012 022 030
- DE-T2- 60 133 606
- US-A1- 2014 250 877

## Beschreibung

Die Erfindung betrifft eine hydraulische Achshöhenverstellung für eine mobile Arbeitsmaschine. Unter Achshöhenverstellung ist die Verstellung der Höhe der betroffenen mobilen Arbeitsmaschine über ihrer Achse und damit über dem Grund zu verstehen.

Mobile Arbeitsmaschinen, z. B. Traktoren, werden heute meist mit einer Vorderachsfederung zur Erhöhung des Fahrkomforts ausgestattet. Diese Vorderachsfederungen können mit einer hydraulischen Achshöhenverstellung kombiniert werden, die bzw. deren Hubzylinder einen von mehreren hydraulischen Verbrauchern der mobilen Arbeitsmaschine darstellt.

Wenn die hydraulische Anordnung der mobilen Arbeitsmaschine über ein Load-Sensing-System verfügt, wird diese Achshöhenverstellung hydraulisch daran angeschlossen. Eine derartige Vorderachsfederung mit Achshöhenverstellung ist in der Veröffentlichung "Hydraulik für Traktoren" der Anmelderin vom Juli 2014 auf den Seiten 137 ff gezeigt.

Bei bekannten Vorderachsfederungen mit Achshöhenverstellung ist ein sogenanntes LS-Zuschaltventil notwendig, mit dem der Lastdruck direkt auf die LS-Leitung der Verstellpumpe geführt wird. Damit wird die Verstellpumpe über ihren Volumenstromregler auf den maximalen Druck der Vorderachsfederung gebracht, welcher über ein Druckbegrenzungsventil abgesichert wird. Mit diesem Druck wird die Achshöhenverstellung betrieben. Dabei ist es bekannt, das LS-Zuschaltventil in einem Ventilblock der Vorderachsfederung vorzusehen, weshalb eine hydraulische LS-Leitung durch die mobile Arbeitsmaschine zur Verstellpumpe gelegt werden muss. DE 10 2012 022030 A1 offenbart eine hydraulische Anordnung zur Achshöhenverstellung für einen Traktor mit einem Federzylinder, der einen in Hubrichtung wirksamen oberen Arbeitskammer aufweist, der auf Grund einer Achslastkomponente der mobilen Arbeitsmaschine mit einem Lastdruck beaufschlagt ist, und mit einer druckgeregelten Verstellpumpe, von der der Arbeitskammer versorgbar ist, und mit einem elektronischen Steuereinrichtung, von dem die Umschaltventilanordnung ansteuerbar ist, und das einen Eingang für ein Hebe-Signal eines Bedienelements hat, wobei bei dem Hebe-Signal die Umschaltventilanordnung über das Steuergerät die Verstellpumpe auf einen Pumpendruck einstellt, der größer als der Lastdruck ist.

Aufgabe der Erfindung ist es, den vorrichtungstechnischen Aufwand derartiger hydraulischer Anordnungen zur Achshöhenverstellung zu vereinfachen, in dem Ventile und Schläuche entfallen, und auch keine Sensorik für die Lastdruckerfassung der Achshöhenverstellung nötig ist.

Diese Aufgabe wird gelöst durch eine Achshöhenverstellung mit den Merkmalen des Patentanspruchs 1.

Weitere vorteilhafte Ausgestaltungen der Erfindung sind in den abhängigen Patentansprüchen beschrieben.

Die erfindungsgemäße hydraulische Anordnung zur Achshöhenverstellung (insbesondere Vorderachshöhenverstellung) für eine mobile Arbeitsmaschine (insbesondere für einen Traktor) weist einen Hubzylinder (insbesondere Differenzialzylinder) auf, der einen in Hubrichtung wirksamen Druckraum (insbesondere Kolbenbodenraum) begrenzt, der auf Grund einer Achslastkomponente oder der gesamten Achslast der mobilen Arbeitsmaschine mit einem Lastdruck beaufschlagt ist. Weiterhin hat die Anordnung eine elektronisch druckgeregelte Verstellpumpe, von der der Druckraum versorgbar ist. Weiterhin hat die Anordnung ein elektronisches Steuergerät, von dem die Verstellpumpe ansteuerbar ist. Das elektronische Steuergerät hat einen Eingang für ein Hebe-Signal eines (vorzugsweise nicht zum Schutzumfang gehörenden) Bedienelements. Wenn vom Fahrer der mobilen Arbeitsmaschine über das Bedienelement das Hebe-Signal an den Eingang übermittelt wird, wird die Verstellpumpe über das Steuergerät auf einen Pumpendruck eingestellt, der größer als der Lastdruck ist. Damit wird der in Hubrichtung wirksame Druckraum sicher befüllt, und die Achshöhenverstellung der mobilen Arbeitsmaschine erfolgt. Damit ist der vorrichtungstechnische Aufwand der Anordnung im Sinne der Aufgabe verringert.

Eine besonders flexibel einsetzbare Weiterbildung hat einen zweiten Hubzylinder (insbesondere Differenzialzylinder), wobei die beiden Hubzylinder einer jeweiligen Seite der mobilen Arbeitsmaschine zugeordnet sind. Auch der zweite Hubzylinder weist einen zweiten in Hubrichtung wirksamen Druckraum (insbesondere Kolbenbodenraum) auf, der auf Grund einer zweiten Achslastkomponente der mobilen Arbeitsmaschine mit einem Lastdruck beaufschlagt ist. Auch der zweite Druckraum wird von der Verstellpumpe versorgt. Damit kann die mobile Arbeitsmaschine an ihren beiden Seiten unterschiedlich hoch abgestützt werden. Z.B. kann ein Traktor beim Pflügen waagerecht ausgerichtet werden, obwohl er einseitig in einer Furche fährt.

Gemäß einer ersten Variante kann dabei der erstgenannte Eingang des elektronischen Steuergerätes für das Hebe-Signal nur einer Seite der mobilen Arbeitsmaschine vorgesehen sein, während das elektronische Steuergerät einen zweiten Eingang für ein zweites Hebe-Signal der anderen Seite der mobilen Arbeitsmaschine aufweist.

Gemäß einer zweiten Variante kann der erstgenannte Eingang des elektronischen Steuergerätes für ein zentrales Hebe-Signal beider Seiten der mobilen Arbeitsmaschine vorgesehen sein, während der zweite Eingang für ein Signal zur links-rechts-Druckmittelverteilung vorgesehen ist.

Die erfindungsgemäße Anordnung kann zur Versorgung weiterer hydraulischer Verbraucher der mobilen Arbeitsmaschine über die Verstellpumpe ausgebildet sein. Dann sind über das Steuergerät Steuerventile zumindest eines Teils der weiteren hydraulischen Verbraucher ansteuerbar.

Die erfindungsgemäße Anordnung weist bei einer besonders bevorzugten Weiterbildung ein elektronisches Load-Sensing-System auf, wobei ein LS-Signal des Lastdrucks des lasthöchsten Verbrauchers zumindest des Teils der weiteren Verbraucher an das Steuergerät übermittelbar oder von dem Steuergerät ermittelbar ist. Der Pumpendruck ist über das Steuergerät in Abhängigkeit des LS-Signals verstellbar. Damit ist die elektronische Vorgabe eines LS-Drucks an die Verstellpumpe besonders einfach.

Dazu kann gemäß einer ersten Variante des elektronischen Load-Sensings jeder weiterer Verbraucher einen Drucksensor aufweisen.

Oder die Steuerventile der weiteren Verbraucher sind gemäß einer zweiten Variante des elektronischen Load-Sensings in einem gemeinsamen Steuerblock angeordnet, wobei über Wechselventile der Lastdruck des lasthöchsten weiteren Verbrauchers ermittelbar ist, der von einem dem gemeinsamen Steuerblock zugeordneten Drucksensor erfassbar und an die Steuereinheit übermittelbar ist.

Vorzugsweise hat die Anordnung zur Achshöhenverstellung eine Absperrventilanordnung, über die die Verstellpumpe mit dem in Hubrichtung wirksamen Druckraum verbindbar ist, und über die alternativ der in Hubrichtung wirksame Druckraum zu einem Tank entlastbar ist. Im Falle des zweiten Hubzylinders ist eine entsprechende zweite Absperrventilanordnung vorgesehen.

Bei einer bevorzugten Weiterbildung hat die Absperrventilanordnung ein als Sitzventil ausgebildetes Hebe-Ventil und ein als Sitzventil ausgebildetes Senk-Ventil. Diese Ventile sind in einer durch eine jeweilige Feder vorgespannten Grundstellung geschlossen, und durch ein jeweiliges Signal von der Steuereinheit aufsteuerbar. Dabei wird über die Steuereinheit jeweils nur eines der beiden Ventile aufgesteuert, während das andere Ventil geschlossen bleibt.

Bei einer bevorzugten Weiterbildung ist an den in Hubrichtung wirksamen Druckraum vorzugsweise über eine Drossel ein Druckspeicher angeschlossen. Im Falle des zweiten Hubzylinders ist ein entsprechender zweiter Druckspeicher vorgesehen.

Vorzugsweise hat der Hubzylinder einen in Senkrichtung wirksamen Druckraum (vorzugsweise Ringraum), an den auch ein Druckspeicher angeschlossen ist. Vorzugsweise ist zwischen dem Druckraum und dem Druckspeicher ein Drosselrückschlagventil angeordnet, dessen Rückschlagventil bzw. Rückschlagfunktion vom Druckspeicher zum Druckraum öffnet. Im Falle des zweiten Hubzylinders ist ein entsprechender zweiter Druckspeicher vorgesehen.

Bei einer besonders komfortablen Weiterbildung umfasst die erfindungsgemäße Anordnung auch eine hydraulische Achsfederung (insbesondere Vorderachsfederung).

Dabei ist der Pumpendruck vorzugsweise über ein weiteres Bedienelement und über das elektronische Steuergerät verstellbar. Dabei wird vor dem Druckspeicher auf der Seite des in Senkrichtung wirksamen Druckraums (vorzugsweise Ringraums) ein Sitzventil vorgesehen, damit der Speicherdruck bzw. Zylinderdruck über den Pumpendruck reguliert bzw. gehalten werden kann, und damit die Federrate der Achsfederung vom Fahrer der mobilen Arbeitsmaschine eingestellt werden kann.

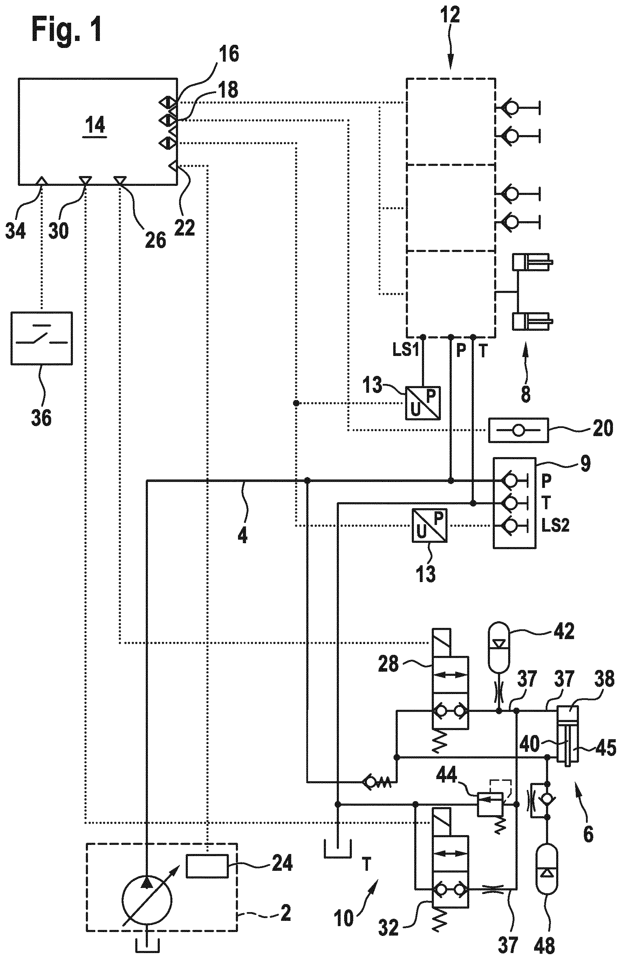

Ein Ausführungsbeispiel einer erfindungsgemäßen Achshöhenverstellung ist in Figur 1 dargestellt.

Figur 1 zeigt einen hydraulischen Schaltplan eines Ausführungsbeispiels der erfindungsgemäßen Achshöhenverstellung. Sie hat eine elektronisch druckgeregelte Verstellpumpe 2, die in einem offenen Kreis aus einem Tank T Druckmittel ansaugt und über eine verzweigte Arbeitsleitung 4 zu Verbrauchern 6, 8, 9 fördert. Bei dem Verbraucher 6 handelt es sich um einen als Differenzialzylinder ausgebildeten Hubzylinder 6 einer Achshöhenverstellung, die mit einer Achsfederung 10 kombiniert ist. Die Achshöhenverstellung und die Achsfederung 10 sind an einer nicht näher gezeigten Vorderachse eines Traktors angeordnet. Der Traktor hat beispielhaft vier weitere Verbraucher, von denen ein Doppelzylinder 8 eines Hubwerks und ein Power-Beyond-Verbraucher 9 gezeigt ist.

In einem Ventilblock 12 sind die Steuerventile des Doppelzylinders 8 des Hubwerks und die Steuerventile zweier weiterer Verbraucher angeordnet. Über (nicht gezeigte) Wechselventile wird der höchste Lastdruck der drei weiteren Verbraucher, die über den Ventilblock 12 versorgt werden, an einem Load-Sensing-Anschluss LS1 des Ventilblocks 12 ausgegeben und von einem Drucksensor 13 in ein elektrisches LS-Signal umgewandelt. Der Load-Sensing-Anschluss LS1 ist dabei an dem Ventilblock 12 angeordnet.

Auch von dem Power-Beyond-Verbraucher 9 wird der Lastdruck an einem Load-Sensing-Anschluss LS2 ausgegeben und von einem Drucksensor 13 in ein elektrisches LS-Signal umgewandelt.

Die beiden elektrischen LS-Signale werden an eine elektronische Steuereinheit 14 übermittelt. Diese hat darüberhinausgehend einen elektrischen Anschluss 16, der mit den Steuerventilen des Ventilblocks 12 verbunden ist. Weiterhin hat die Steuereinheit 14 einen elektrischen Anschluss 18, der mit einem ISO-Bus 20 verbunden ist. Weiterhin hat die elektronische Steuereinheit 14 einen elektrischen Ausgang 22, der mit einer Verstellvorrichtung 24 der Verstellpumpe 2 verbunden ist.

Weiterhin hat die Steuereinheit 14 einen elektrischen Hebe-Ausgang 26, der mit einem als Sitzventil ausgebildeten Absperrventil verbunden ist, das als Hebe-Ventil 28 dient. In prinzipiell vergleichbarer Weise hat die Steuereinheit 14 einen Senk-Ausgang 30, der mit einem als Sitzventil ausgebildeten Absperrventil verbunden ist, das als Senk-Ventil 32 dient. Schließlich hat die Steuereinheit 14 einen elektrischen Eingang 34 für ein Hebe-Signal und für ein Senk-Signal eines Bedienelements 36.

Wenn der Fahrer der mobilen Arbeitsmaschine über das Bedienelement 36 ein Hebe-Signal an den Eingang 34 der Steuereinheit 14 übermittelt, wird über die Steuereinheit 14 das Hebe-Ventil 28 bestromt, so dass es gegen die Kraft seiner Feder geöffnet wird und die Arbeitsleitung 4 über eine kolbenbodenraumseitige Leitung 37 mit einem in Hubrichtung wirksamen Kolbenbodenraum 38 des Hubzylinders 6 verbunden wird, so dass dieser von der Verstellpumpe 2 mit Druckmittel befüllt wird. Dadurch wird eine Kolbenstange 40 des Hubzylinders 6 ausgefahren, wodurch die mobile Arbeitsmaschine angehoben wird. Wenn der Fahrer der mobilen Arbeitsmaschine über das Bedienelement 36 ein Senk-Signal an die Steuereinheit 14 übermittelt, öffnet diese das Senk-Ventil 32, womit der Kolbenbodenraum 38 zum Tank T entlastet wird. Dadurch kann die Kolbenstange 40 einfahren und die mobile Arbeitsmaschine wird abgesenkt.

An die kolbenbodenraumseitige Leitung 37 ist über eine Drossel ein kolbenbodenraumseitiger Druckspeicher 42 angeschlossen, der eine gedämpfte Federfunktion der erfindungsgemäßen Anordnung bereitstellt. Weiterhin ist die kolbenbodenraumseitige Leitung 37 über ein Druckbegrenzungsventil 44 abgesichert.

Ein Ringraum 45 des Hubzylinders 6 ist über eine ringraumseitige Leitung 46 dauerhaft mit der Arbeitsleitung 4 verbunden. An die ringraumseitige Leitung 46 ist über ein Drosselrückschlagventil ein ringraumseitiger Druckspeicher 48 angeschlossen, wobei die Öffnungsrichtung des Drosselrückschlagventils vom Druckspeicher 48 zur ringraumseitigen Leitung 46 gerichtet ist.

Offenbart ist eine hydraulische Achshöhenverstellung insbesondere in Verbindung mit einer hydraulischen Federung für eine mobile Arbeitsmaschine. Eine elektronisch druckgeregelten Verstellpumpe wird von einer elektronischen Steuereinheit beim Anheben der mobilen Arbeitsmaschine auf einen Pumpendruck eingestellt, der über dem Lastdruck der Gewichtskraft der mobilen Arbeitsmaschine liegt, so dass die mobile Arbeitsmaschine sicher angehoben wird.

Bei einer Weiterbildung sind neben der Achshöhenverstellung auch weitere Verbraucher von der Verstellpumpe mit einem elektronischen Load Sensing System versorgbar. Dann ist die elektronische Vorgabe eines LS-Drucks von der Steuereinheit an die Verstellpumpe besonders einfach.

## Patentansprüche

1. Hydraulische Anordnung zur Achshöhenverstellung für eine mobile Arbeitsmaschine mit einem Hubzylinder (6), der einen in Hubrichtung wirksamen Druckraum (38) aufweist, der auf Grund einer Achslastkomponente der mobilen Arbeitsmaschine mit einem Lastdruck beaufschlagt ist, und mit einer elektronisch druckgeregelten Verstellpumpe (2), von der der Druckraum (38) versorgbar ist, und mit einem elektronischen Steuergerät (14), von dem die Verstellpumpe (2) ansteuerbar ist, und das einen Eingang (34) für ein Hebe-Signal eines Bedienelements (36) hat, wobei bei dem Hebe-Signal die Verstellpumpe (2) über das Steuergerät (14) auf einen Pumpendruck (P) einstellbar ist, der größer als der Lastdruck ist.

2. Anordnung nach Anspruch 1 mit einem zweiten Hubzylinder, wobei die beiden Hubzylinder einer jeweiligen Seite der mobilen Arbeitsmaschine zugeordnet sind, und wobei der zweite Hubzylinder einen zweiten in Hubrichtung wirksamen Druckraum aufweist, der auf Grund einer zweiten Achslastkomponente der mobilen Arbeitsmaschine mit einem Lastdruck beaufschlagt ist, wobei der zweite Druckraum von der Verstellpumpe (2) versorgbar ist.

3. Anordnung nach Anspruch 2, wobei der erstgenannte Eingang (34) des elektronischen Steuergerätes (14) für das Hebe-Signal einer Seite der mobilen Arbeitsmaschine vorgesehen ist, und wobei das elektronische Steuergerät einen zweiten Eingang für ein zweites Hebe-Signal der anderen Seite der mobilen Arbeitsmaschine aufweist, oder wobei der erstgenannte Eingang (34) des elektronischen Steuergerätes (14) für ein zentrales Hebe-Signal beider Seiten der mobilen Arbeitsmaschine vorgesehen ist, und wobei das elektronische Steuergerät (14) einen zweiten Eingang für ein Signal zur links-rechts-Druckmittelverteilung aufweist.

4. Anordnung nach einem der vorhergehenden Ansprüche, wobei weitere Verbraucher (8, 9) der mobilen Arbeitsmaschine von der Verstellpumpe (2) versorgbar sind, und wobei über das Steuergerät (14) Steuerventile der weiteren hydraulischen Verbraucher (8, 9) ansteuerbar sind.

5. Anordnung nach Anspruch 4 mit einem elektronischen Load-Sensing-System, wobei ein LS-Signal des Lastdrucks des lasthöchsten Verbrauchers der weiteren Verbraucher (8, 9) an das Steuergerät (14) übermittelbar oder von dem Steuergerät (14) ermittelbar ist, und wobei der Pumpendruck (P) über das Steuergerät (14) in Abhängigkeit des LS-Signals verstellbar ist.

6. Anordnung nach Anspruch 5, wobei die Steuerventile der weiteren Verbraucher (8) in einem gemeinsamen Steuerblock (12) angeordnet sind, und wobei über Wechselventile der Lastdruck des lasthöchsten Verbrauchers ermittelbar ist, der von einem Drucksensor (13) erfassbar und an die Steuereinheit (14) übermittelbar ist.

7. Anordnung nach einem der vorhergehenden Ansprüche mit einer Absperrventilanordnung, über die die Verstellpumpe (2) mit dem in Hubrichtung wirksamen Druckraum (38) verbindbar ist, und über die der in Hubrichtung wirksame Druckraum (38) zu einem Tank (T) entlastbar ist.

8. Anordnung nach Anspruch 7, wobei die Absperrventilanordnung ein als Sitzventil ausgebildetes Hebe-Ventil (28) und ein als Sitzventil ausgebildetes Senk-Ventil (32) aufweist, die jeweils in einer durch eine Feder vorgespannten Grundstellung geschlossen sind, und die durch ein jeweiliges Signal von der Steuereinheit (14) aufsteuerbar sind.

9. Anordnung nach einem der vorhergehenden Ansprüche, wobei an den in Hubrichtung wirksamen Druckraum (38) ein Druckspeicher (42) angeschlossen ist.

10. Anordnung nach einem der vorhergehenden Ansprüche, wobei der Hubzylinder (6) einen in Senkrichtung wirksamen Druckraum (45) hat, an den ein weiterer Druckspeicher (48) angeschlossen ist.

11. Anordnung nach einem der vorhergehenden Ansprüche, die eine hydraulische Achsfederung bildet.

12. Anordnung nach Anspruch 11, wobei der Pumpendruck (P) über ein weiteres Bedienelement verstellbar ist.

## Claims

1. Hydraulic arrangement for axle height adjustment for a mobile working machine, having a lifting cylinder (6) which has a pressure space (38) which acts in the lifting direction and is charged with a load pressure on the basis of an axle load component of the mobile working machine, and having an electronically pressure-regulated variable-displacement pump (2) by which the pressure space (38) can be supplied, and having an electronic control device (14) by which the variable-displacement pump (2) can be driven and which has an input (34) for a lifting signal of an operator control element (36), wherein, using the lifting signal, the variable-displacement pump (2) can be set by means of the control device (14) to a pump pressure (P) which is greater than the load pressure.

2. Arrangement according to Claim 1, having a second lifting cylinder, wherein the two lifting cylinders are associated with a respective side of the mobile working machine, and wherein the second lifting cylinder has a second pressure space which acts in the lifting direction and is charged with a load pressure on the basis of a second axle load component of the mobile working machine, wherein the second pressure space can be supplied by the variable-displacement pump (2).

3. Arrangement according to Claim 2, wherein the first-mentioned input (34) of the electronic control device (14) is provided for the lifting signal of one side of the mobile working machine, and wherein the electronic control device has a second input for a second lifting signal of the other side of the mobile working machine, or wherein the first-mentioned input (34) of the electronic control device (14) is provided for a central lifting signal of both sides of the mobile working machine, and wherein the electronic control device (14) has a second input for a signal for left/right pressure medium distribution.

4. Arrangement according to one of the preceding claims, wherein further consumers (8, 9) of the mobile working machine can be supplied by the variable-displacement pump (2), and wherein control valves of the further hydraulic consumers (8, 9) can be driven by means of the control device (14).

5. Arrangement according to Claim 4, having an electronic load-sensing system, wherein a load-sensing signal for the load pressure of the highest-load consumer from amongst the further consumers (8, 9) can be transmitted to the control device (14) or can be ascertained by the control device (14), and wherein the pump pressure (P) can be adjusted by means of the control device (14) depending on the load-sensing signal.

6. Arrangement according to Claim 5, wherein the control valves of the further consumers (8) are arranged in a common control block (12), and wherein the load pressure of the highest-load consumer can be ascertained by means of shuttle valves and can be detected by a pressure sensor (13) and can be transmitted to the control unit (14).

7. Arrangement according to one of the preceding claims, having a shut-off valve arrangement by means of which the variable-displacement pump (2) can be connected to the pressure space (38) which acts in the lifting direction, and by means of which the pressure space (38) which acts in the lifting direction can be discharged to a tank (T).

8. Arrangement according to Claim 7, wherein the shut-off valve arrangement has a lifting valve (28) in the form of a seat valve and a lowering valve (32) in the form of a seat valve, which lifting valve and lowering valve are both closed in a basic position subject to preloading by a spring and can be opened by a respective signal from the control unit (14).

9. Arrangement according to one of the preceding claims, wherein a pressure accumulator (42) is connected to the pressure space (38) which acts in the lifting direction.

10. Arrangement according to one of the preceding claims, wherein the lifting cylinder (6) has a pressure space (45) which acts in the lowering direction and to which a further pressure accumulator (48) is connected.

11. Arrangement according to one of the preceding claims, which forms a hydraulic axle suspension.

12. Arrangement according to Claim 11, wherein the pump pressure (P) can be adjusted by means of a further operator control element.

## Revendications

1. Ensemble hydraulique destiné à régler la hauteur d'essieu d'une machine de travail mobile, ledit ensemble hydraulique comprenant un vérin de levage (6) qui comporte une chambre de pression (38) qui est opérante dans la direction de levage et qui est soumise à une pression de charge en raison d'une composante de charge d'essieu de la machine de travail mobile, et une pompe à cylindrée variable (2) qui est commandée électroniquement en pression et qui permet d'alimenter la chambre de pression (38), et une unité de commande électronique (14) qui permet de commander la pompe à cylindrée variable (2) et qui comporte une entrée (34) destinée à un signal de levage d'un élément de service (36), au signal de levage la pompe à cylindrée variable (2) pouvant être réglée par le biais de l'unité de commande (14) à une pression de pompe (P) qui est supérieure à la pression de charge.

2. Ensemble selon la revendication 1 comprenant un deuxième vérin de levage, les deux vérins de levage étant associés à un côté respectif de la machine de travail mobile, et le deuxième vérin de levage comportant une deuxième chambre de pression qui est opérante dans la direction de levage et qui peut être soumise à une pression de charge en raison d'une deuxième composante de charge d'essieu de la machine de travail mobile, la deuxième chambre de pression pouvant être alimentée par la pompe à cylindrée variable (2).

3. Ensemble selon la revendication 2, la première entrée mentionnée (34) de l'unité de commande électronique (14) étant prévue pour le signal de levage d'un côté de la machine de travail mobile, et l'unité de commande électronique comportant une deuxième entrée destinée à un deuxième signal de levage de l'autre côté de la machine de travail mobile, ou la première entrée mentionnée (34) de l'unité de commande électronique (14) étant prévue pour un signal de levage central des deux côtés de la machine de travail mobile, et l'unité de commande électronique (14) comportant une deuxième entrée destinée à un signal de distribution de fluide sous pression gauche-droite.

4. Ensemble selon l'une des revendications précédentes, d'autres consommateurs (8, 9) de la machine de travail mobile pouvant être alimentés par la pompe à cylindrée variable (2), et des soupapes de commande des autres consommateurs hydrauliques (8, 9) pouvant être commandées par le biais de l'unité de commande (14).

5. Ensemble selon la revendication 4 comprenant un système de détection de charge électronique, un signal LS de la pression de charge du consommateur ayant la charge la plus élevée des autres consommateurs (8, 9) pouvant être transmis à l'unité de commande (14) ou pouvant être déterminé par l'unité de commande (14), et la pression de pompe (P) étant réglable par le biais de l'unité de commande (14) en fonction du signal LS.

6. Ensemble selon la revendication 5, les soupapes de commande des autres consommateurs (8) étant disposées dans un bloc de commande commun (12), et la pression de charge du consommateur ayant la charge la plus élevée pouvant être déterminée par le biais de soupapes à deux voies, laquelle pression de charge peut être détectée par un capteur de pression (13) et transmise à l'unité de commande (14).

7. Ensemble selon l'une des revendications précédentes comprenant un ensemble de soupape d'arrêt qui permet de relier la pompe à cylindrée variable (2) à la chambre de pression (38) qui est opérante dans la direction de levage et qui permet de détendre la chambre de pression (38), qui est opérante dans la direction de levage, vers un réservoir (T).

8. Ensemble selon la revendication 7, l'ensemble de soupapes d'arrêt comprenant une soupape de levage (28) de type soupape à siège et une soupape d'abaissement (32) de type soupape à siège, qui sont chacune fermées dans une position de base précontrainte par un ressort et qui peuvent être commandées par un signal respectif provenant de l'unité de commande (14).

9. Ensemble selon l'une des revendications précédentes, un accumulateur de pression (42) étant raccordé à la chambre de pression (38) qui est opérante dans la direction de levage.

10. Ensemble selon l'une des revendications précédentes, le vérin de levage (6) comportant une chambre de pression (45) qui est opérante dans la direction d'abaissement et à laquelle un autre accumulateur de pression (48) est raccordé.

11. Ensemble selon l'une des revendications précédentes, qui forme une suspension d'essieu hydraulique.

12. Ensemble selon la revendication 11, la pression de pompe (P) pouvant être ajustée par le biais d'un autre élément de service.
